(19) **Europäisches Patentamt**

**European Patent Office**

**Office européen des brevets**

(11) Veröffentlichungsnummer: **0 150 324**

**B1**

(12) # EUROPÄISCHE PATENTSCHRIFT

(45) Veröffentlichungstag der Patentschrift:
22.07.87

(51) Int. Cl.⁴: **H 02 K 29/06**

(21) Anmeldenummer: **84114349.8**

(22) Anmeldetag: **27.11.84**

(54) Kollektorloser Gleichstrommotor.

(30) Priorität: **28.11.83 DE 3342986**

(43) Veröffentlichungstag der Anmeldung:
**07.08.85 Patentblatt 85/32**

(45) Bekanntmachung des Hinweises auf die Patenterteilung:
**22.07.87 Patentblatt 87/30**

(84) Benannte Vertragsstaaten:
**AT CH DE FR GB LI NL**

(56) Entgegenhaltungen:
**DE-A-3 145 248**
**DE-A-3 247 359**
**FR-A-2 478 896**

(73) Patentinhaber: **PAPST- MOTOREN GmbH & Co. KG, Karl- Maier- Strasse 1 Postfach 35, D-7742 St. Georgen/Schwarzwald 1 (DE)**

(72) Erfinder: **Körner, Ernst Moritz, Ing. grad., Ginsterweg 5, D-7742 St. Georgen (DE)**

(74) Vertreter: **Raible, Hans, Dipl.- Ing., Lenbachstrasse 32, D-7000 Stuttgart 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

### Beschreibung

Die Erfindung betrifft einen kollektorlosen Gleichstrommotor nach dem Oberbegriff des Patentanspruchs 7.

Ein derartiger Motor ist bekannt aus Fig. 7 der US-A-4 374 347. Dort weisen beide Halbleitersteuermittel eine Schaltverzögerung auf. Die beiden Halbleitersteuermittel sind dort komplementäre Darlingtontransistoren, die jeweils mit einem Millerkondensator (zwischen Kollektor und Basis) versehen sind, um HF-Schwingungen zu vermeiden. Ein solcher Millerkondensator bewirkt eine -meist erwünschte - Verzögerung beim Ein- und Ausschalten des betreffenden Transistors. Dabei hat sich in der Praxis gezeigt, daß die Abschaltverzögerung größer sein kann als die Einschaltverzögerung. Wenn nun zwischen den beiden Wicklungssträngen eines Strangpaares eine gewisse induktive Kopplung vorhanden ist, was bei einem Elektromotor durch den magnetischen Kreis fast zwangsläufig der Fall ist, so bewirkt ein verzögertes Abschalten des einen und ein schnelles Einschalten des anderen Transistors ein starkes Ansteigen des Stroms in dem gerade abschaltenden Wicklungsstrang, bevor dieser Strom schließlich abgeschaltet wird. Solche Stromspitzen führen aber zu hochfrequenten Störungen, zu unerwünschten Motorgeräuschen, und sie bewirken eine verstärkte Belastung des gerade abschaltenden Halbleitersteuermittels.

Aus der DE-A-3 247 359 ist eine Schaltung für einen kollektorlosen Gleichstrommotor bekannt, mit der zwischen zwei aufeinanderfolgenden Statorstromimpulsen eine Schaltpause erzeugt werden kann, wie dies vor allem bei Vollbrückenschaltungen erforderlich ist. Hierzu werden die Basen von zwei Leistungstransistoren gleichen Leitungstyps durch einen Kondensator gekoppelt. Bei der Kommutierung bewirkt dieser Kondensator zunächst eine Sperrung des an sich einzuschaltenden Leistungstransistors. Erst wenn der Kondensator über einen relativ hochohmigen Widerstand umgeladen worden ist, kann dieser Leistungstransistor dann einschalten. Eine solche Schaltung setzt jedoch das Vorhandensein gegenphasiger Steuersignale voraus und ist deshalb relativ aufwendig und wird in der Praxis nur zur Ansteuerung von Vollbrückenschaltungen verwendet.

Es ist deshalb eine Aufgabe der Erfindung, bei einem eingangs genannten kollektorlosen Gleichstrommotor mit einfachen Mitteln den Kommutierungsvorgang zu verbessern.

Diese Aufgabe wird bei einem eingangs genannten kollektorlosen Gleichstrommotor gelöst durch die im kennzeichnenden Teil des Anspruchs 1 angegebenen Maßnahmen. Durch die wechselspannungsmäßige Kopplung der Steuerausgänge des genannten Netzwerks erhalten die Potentialänderungen an dessen beiden Ausgängen im wesentlichen denselben Verlauf, d.h. es kann nicht das eine Potential wesentlich schneller ansteigen (oder abfallen) als das andere. Dadurch werden die Schaltvorgänge an den beiden Halbleitersteuermitteln zwangssynchronisiert, und man vermeidet unerwünschte Stromspitzen in den Wicklungssträngen kurz vor deren Abschalten. Gleichzeitig gelingt es mit einer solchen Anordnung bei geeigneter Auslegung, die beim Abschalten im jeweiligen Strang gespeicherte induktive Energie im betreffenden Halbleitersteuermittel durch analoge Schaltvorgänge in Wärme umzusetzen, so daß ein gesonderter Speicherkondensator im Motor entfallen kann. Solche Speicherkondensatoren, wie sie z. B. in der eingangs genannten US-A-4 374 347 dargestellt sind, müssen relativ hohe Kapazitätswerte haben und müssen daher als Elektrolytkondensatoren ausgeführt werden, welche nur eine begrenzte Lebensdauer haben. Diese kann bei einfachen und billigen Typen kürzer sein als die zu erwartende mechanische Lebensdauer des Motors, in dem sich diese Kondensatoren befinden. Zudem erfordern solche Kondensatoren relativ viel Platz im Motor. Dagegen benötigt man für die erfindungsgemäße wechselspannungsmäßige Kopplung der Steuerelektroden (der beiden Halbleitersteuermittel) nur einen kleinen Kondensator, der als Keramikkondensator ausgeführt sein kann und der deshalb eine sehr hohe Lebensdauer hat, die regelmäßig größer ist als die mechanische Lebensdauer des Motors, so daß sich also per Saldo durch die Erfindung auch die Lebensdauer des Motors auf denjenigen Wert erhöht, der durch dessen mechanische Lebensdauer vorgegeben ist. Zudem kann die Schaltung für einen erfindungsgemäßen Motor ganz außerordentlich klein gebaut werden, da sie nur wenige Bauelemente aufweist, welche überdies zum großen Teil Widerstände sind, was den Bau äußerst kompakter Motoren ermöglicht. Eine solche Schaltung kann z. B. als gedruckte Schaltung auf einer Kreisringscheibe mit einem Außendurchmesser von 43 mm und einem Innendurchmesser von 22 mm aufgebaut werden, wobei dieser Ring - bestückt - eine maximale Dicke von 4 mm hat, über die nur der Hall-IC und ggf. ein PTC-Widerstand um einige Millimeter herausragen. Dies ist besonders für Lüfter mit kleinen Abmessungen von Bedeutung, deren Bau mit integrierter Elektronik durch die vorliegende Erfindung erst ermöglicht wird.

Weitere Einzelheiten und vorteilhafte Weiterbildungen der Erfindung ergeben sich aus dem im folgenden beschriebenen und in der Zeichnung dargestellten, in keiner Weise als Einschränkung der Erfindung zu verstehenden Ausführungsbeispiel, sowie aus den Unteransprüchen. Es zeigt:

Fig. 1a und 1b eine schematische Darstellung eines zweipoligen, zweisträngigen kollektorlosen Gleichstrommotors bekannter Bauart, wie er bei der Erfindung verwendet werden kann,

Fig. 2 den Aufbau einer aus dem Stand der Technik bekannten Schaltung für die Steuerung der Kommutierung des Motors nach Fig. 1,

Fig. 3 Schaubilder zur Erläuterung der Wirkungsweise des Motors nach Fig. 2,

Fig. 4 den Aufbau einer erfindungsgemäßen Schaltung zur Steuerung der Kommutierung eines zweisträngigen Motors, z. B. des Motors nach Fig. 1, und

Fig. 5 Schaubilder zur Erläuterung der Wirkungsweise der Schaltung nach Fig. 4.

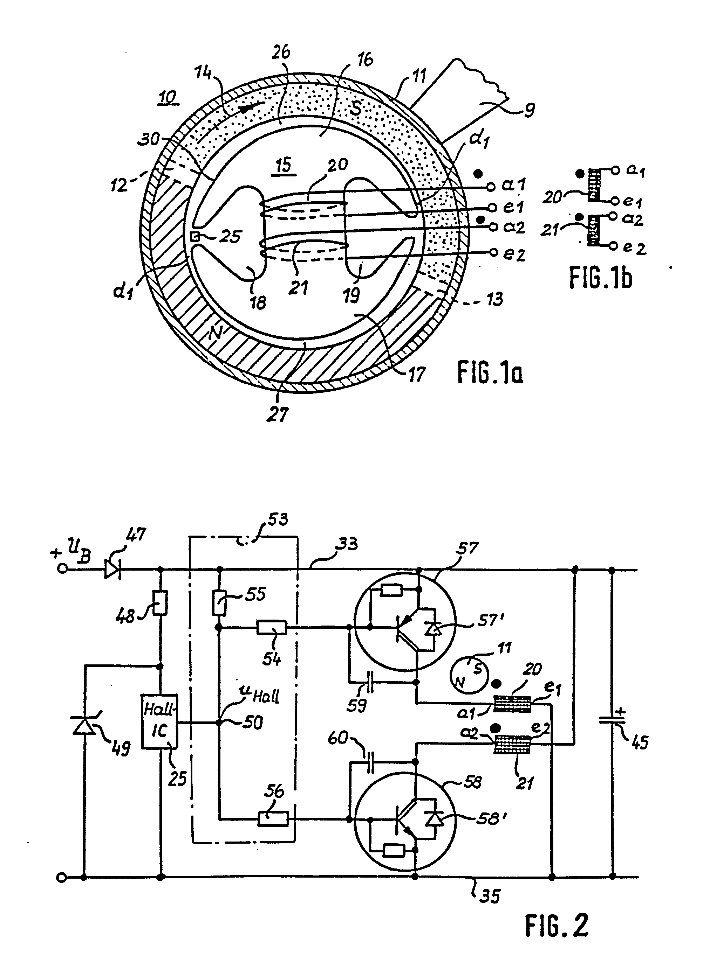

Fig. 1 zeigt einen Außenläufermotor 10 bekannter Bauart mit einem äußeren, als durchgehender Magnetring ausgebildeten zweipoligen Rotor 11, dessen Magnetisierung etwa trapezförmig ausgebildet ist, also mit einer praktisch konstanten Induktion im Bereich der Pole, und mit schmalen Pollücken.

In Fig. 7 sind die Stellen mit praktisch konstanter Induktion für den Nordpol durch Schraffieren und für den Südpol mit grauer Farbe symbolisch angedeutet. Der Rotor 11 ist als radial magnetisiertes permanentmagnetisches Teil, z. B. aus Bariumferrit oder einem "Gummimagneten", ausgebildet. Die beiden Pollücken sind ebenfalls symbolisch angedeutet und mit 12 und 13 bezeichnet. Fig. 1 zeigt den Rotor 11 in einer seiner beiden stabilen Ruhestellungen, die er bei stromlosem Zustand des Motors einnehmen kann. Diese Ruhestellungen sind durch die Form des Luftspalts und die Form der Magnetisierung bestimmt. Im Betrieb läuft der Rotor 11 in Richtung des Pfeiles 14. Bei 9 ist ein Lüfterflügel angedeutet, der auf dem Rotor 11 direkt befestigt ist.

Der Stator 15 des Motors 10 ist als Doppel-T-Anker mit einem oberen Pol 16 und einem unteren Pol 17 ausgebildet, welche beide etwa die Umrißform eines Regenschirms haben, also jeweils fast den ganzen Polbogen umspannen, und welche zwischen sich zwei Nuten 18 und 19 einschließen, in denen zwei Wicklungsstränge 20 und 21 einer zweisträngigen Wicklung angeordnet sind. Die Anschlüsse des Wicklungsstranges 20 sind mit a1 und e1 bezeichnet, die des Wicklungsstranges 21 mit a2 und e2. Die Wicklungen 20 und 21 haben gleiche Windungszahlen und den gleichen Wicklungssinn, d.h. wenn ein Gleichstrom von a1 nach e1 fließt, ergibt sich identisch dieselbe Magnetisierung des Stators 15, wie wenn derselbe Gleichstrom von a2 nach e2 fließt. In diesem Falle ergibt sich die Punktdarstellung gemäß Fig. 1b, d.h. die Wicklung 20 hat den Punkt beim Anschluß a1, die Wicklung 21 beim Anschluß a2. Diese Darstellung wird auch in den folgenden Figuren in gleicher Weise angewendet. Die Wicklungen 20 und 21 können in bevorzugter Weise nach der Lehre der DE-A-2 239 167 bifilar gewickelt sein, um eine enge induktive Kopplung zwischen ihnen zu erhalten.

Rotorstellungsabhängige Sensormittel, hier ein Hall-IC 25, sind in einer Winkelstellung am Stator 15 angeordnet, die etwa der Öffnung der Nut 18 entspricht oder gegenüber dieser Öffnung entgegen der Drehrichtung 14, also entgegen dem Uhrzeigersinn, um einige Grad versetzt ist.

Der Hall-IC 25 wird hier durch das Magnetfeld des permanentmagnetischen Rotors 11 gesteuert und gibt abhängig von der Rotorstellung ein Signal ab, das entweder hoch oder tief ist, also bei Drehung des Rotors 11 praktisch ein Rechtecksignal darstellt, dessen hohe und tiefe Abschnitte jeweils etwa 180° el. lang sind.

Der Luftspalt 26 über dem Statorpol 16 und der Luftspalt 27 über dem Statorpol 17 sind in besonderer Weise ausgebildet. Ausgehend von der Nut 18 nimmt, in Drehrichtung 14 gemessen, der Luftspalt 26 während etwa 10...15 Grad monoton bis zu einer ersten Stelle 30 zu, an welcher er sein Maximum erreicht. Von da an nimmt der Luftspalt 26 über etwa 170 Grad el. monoton ab bis etwa zur Öffnung der Nut 19, wo er wie dargestellt seinen Minimalwert d1 erreicht. Der Luftspalt 27 hat, wie dargestellt, einen identischen Verlauf. Diese Luftspaltform, im Zusammenwirken mit der beschriebenen Art der Magnetisierung des Rotors 11, bewirkt im Betrieb die Entstehung eines Reluktanzmoments bestimmter Form, wie das ausführlich in der DE-B-2 346 380 beschrieben ist, auf die zur Vermeidung von Längen verwiesen wird. - Naturgemäß kann statt eines Motors der in Fig. 1 dargestellten Art auch ein Flachmotor mit eisenlosem Stator, z. B. nach der DE-A-2 239 167, verwendet werden, oder z. B. ein Innenläufermotor, oder ein Motor mit einer höheren Polzahl, wie ihn z. B. die DE-A-2 835 210 in Fig. 2 oder 9 zeigt. Die Erfindung ist also in keiner Weise auf die Ausführungsform der Fig. 1 beschränkt, sondern diese dient nur dazu, die Erfindung an einem konkreten Beispiel verständlich zu machen.

Fig. 2 zeigt eine Schaltung für den Motor der Fig. 1, wie sie z. B. aus Fig. 7 der bereits erwähnten US-A-4 374 347 bekannt ist. Eine Plusleitung 33 liegt über eine Diode 47 an einer positiven Betriebsspannung $U_B$, z. B. von einer Batterie, und eine Minusleitung 35 kann z. B. am Minuspol dieser Batterie (z. B. 12, 24 oder 48 V) angeschlossen sein. Der Hall-IC 25 ist mit einem Anschluß an die Minusleitung 35 und mit seinem anderen Anschluß über einen Widerstand 48 an die Plusleitung 33 angeschlossen. Parallel zu ihm liegt eine Zenerdiode 49, die die Spannung am Hall-IC 25 z. B. auf 5 V regelt. Der Ausgang 50 des Hall-IC 25 ist an ein Widerstandsnetzwerk 53 mit drei Widerständen 54, 55, 56 angeschlossen. Der Widerstand 54 führt vom Ausgang 50 zur Basis eines pnp-Darlingtontransistors 57, der Widerstand 55 vom Ausgang 50 zur plusleitung 33, und der Widerstand 56 führt vom Ausgang 50 zur Basis eines npn-Transistors 58, der ein zum Transistor 57 komplementärer Typ ist. Der Emitter des Transistors 57 ist mit der plusleitung 33 verbunden, sein Kollektor mit dem Anschluß a1 des Wicklungsstranges 20, und antiparallel zu ihm liegt eine Diode 57'. Der Anschluß e1 des Wicklungsstranges 20 liegt an der Minusleitung 35.

Der Emitter des Transistors 58 liegt an der Minusleitung 35; sein Kollektor ist mit dem Anschluß a2 des Wicklungsstranges 21 verbunden, dessen anderer Anschluß e2 an der Plusleitung 33 liegt. Antiparallel zum Transistor 58 liegt eine Diode 58'. Zwischen den Leitungen 33 und 35 liegt ein Speicherkondensator 45. Die Wicklungen 20 und 21 sind durch bifilare Wicklung eng gekoppelt. Bezüglich der Anschlüsse a1, e1 und a2, e2 wird auf die Darstellung nach Fig. 1a und 1b verwiesen. Der Transistor 57 ist mit einem Millerkondensator 59 versehen, der zwischen dessen Kollektor und Basis liegt. Ebenso ist der Transistor 58 mit einem Millerkondensator 60 versehen, der zwischen dessen Kollektor und Basis liegt. Diese Millerkondensatoren, die z. B. einen Kapazitätswert von 150 pF haben, bewirken eine Gegenkopplung vom Kollektor zur Basis und verlangsamen das Ein- und Ausschalten der Transistoren 57 und 58, reduzieren auf diese Weise induktive Schaltspitzen, und reduzieren hochfrequente Schwingungen.

Schaltet beim Betrieb des Motors z. B. der Transistor 57 ein, so fließt ein Strom von a1 nach e1, und der Statorpol 16 wird ein Südpol, der Statorpol 17 dagegen ein Nordpol. Schaltet dagegen der Transistor 58 ein. so fließt ein Strom von e2 nach a2, d.h. der Statorpol 16 wird ein Nordpol und der Statorpol 17 ein Südpol. In der in Fig. 1 dargestellten Stellung, in der dem Hall-IC 25 ein Nordpol des Rotors 11 gegenübersteht, wird also der Transistor 57 und damit der Wicklungsstrang 20 eingeschaltet, und im umgekehrten Fall (Südpol des Rotors 11 bei Hall-IC 25) der Wicklungsstrang 21, damit sich die Drehrichtung 14 ergibt. Wenn dem Hall-IC 25 ein Nordpol gegenübersteht, wird also sein Ausgang 50 niedrig, hat also etwa das potential der Minusleitung 35, und deshalb sperrt der Transistor 58, und der Transistor 57 wird leitend. Steht umgekehrt dem Hall-IC 25 ein Südpol gegenüber, so wird der Ausgang 50 hoch, also positiv, der Transistor 58 wird leitend, und der Transistor 57 sperrt. Man kann also mit dem einen Ausgangssignal am Ausgang 50 die beiden Transistoren 57 und 58 über das aus passiven Bauelementen aufgebaute Netzwerk 53 gegenphasig ansteuern.

Die Millerkondensatoren 59 und 60 reduzieren wie erläutert die Geschwindigkeit der Schaltvorgänge. Es hat sich aber in der Praxis erwiesen, daß diese Reduzierung beim Einschaltvorgang weniger stark wirkt als beim Ausschaltvorgang, und daß sich hieraus in überraschender Weise probleme ergeben können.

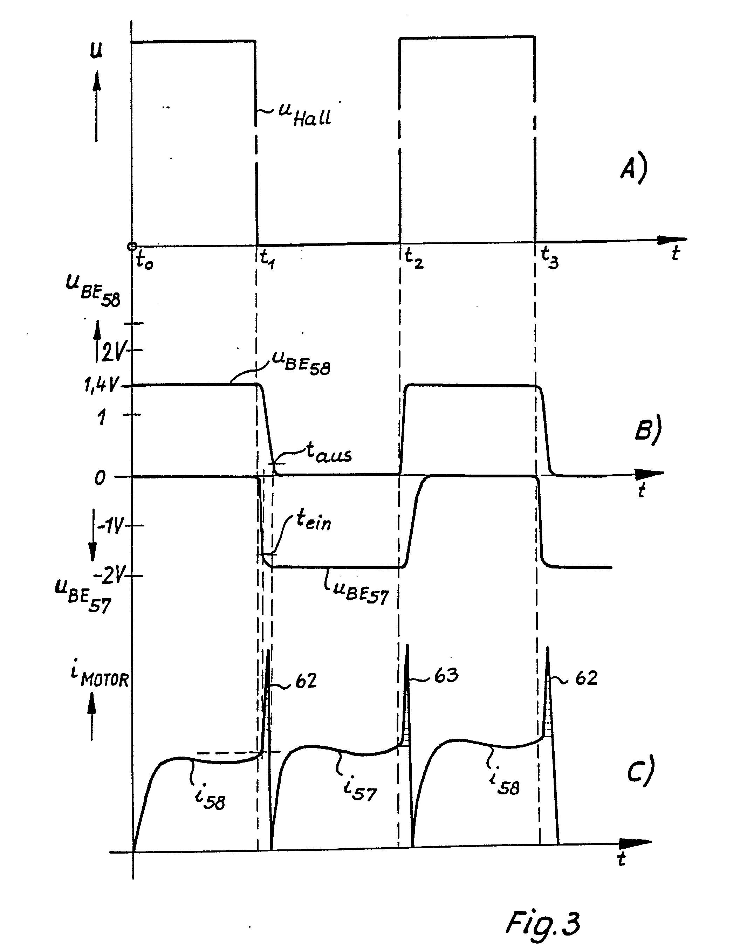

Hierzu wird auf Fig. 3 Bezug genommen. Diese zeigt bei A) die Hallspannung $u_{Hall}$ am Anschluß 50. Wird der Motor nach Fig. 2 z. B. mit 12 V betrieben, so springt diese Hallspannung zwischen etwa 12 V und 0 V, je nach der Lage des Rotors 11. Z.B. springt sie zu den Zeitpunkten t1 und t3 von 12 V auf 0 V, und zum Zeitpunkt t2 von 0 V auf 12 V. Die Zeitpunkte t0, t1, t2, t3 haben jeweils gleiche Abstände von 180° el, bezogen auf die Drehung des Rotors 11.

Fig. 3B zeigt die Basis-Emitter-Spannungen $u_{BE}$ der Transistoren 57 und 58. Wie man erkennt, ist zwischen den Zeitpunkten t0 und t1 der Transistor 58 leitend, da seine Basis-Emitter-Spannung 1,4 V beträgt, weil die Hallspannung $u_{Hall}$ einen hohen Wert hat. Gleichzeitig ist der Transistor 57 gesperrt. Zum Zeitpunkt t1 springt $u_{Hall}$ auf Null, und die Spannung $u_{BE58}$ geht, mit einer durch den Millerkondensator 60 bewirkten Verzögerung, auf Null. Wenn diese Spannung 10 % ihres vorherigen Wertes erreicht hat, ist der Zeitpunkt t taus erreicht zu dem der Transistor 58 abgeschaltet ist.

Umgekehrt fängt zum Zeitpunkt t1 die Basis-Emitter-Spannung des Transistors 57 an, negativer zu werden, und zwar recht schnell, so daß sie schon nach einer kurzen Zeit $t_{ein}$ 90 % ihres vollen Wertes erreicht hat, bei dem der Transistor 57 eingeschaltet wird.

Der Zeitpunkt $t_{ein}$ lieg also zeitlich vor dem Zeitpunkt $t_{aus}$, d.h die Steigung du/dt der einschaltenden Kurve $u_{BE57}$ ist steiler als diejenige der ausschaltenden Kurve $u_{BE58}$ zum Zeitpunkt t1, und folglich sind beide Transistoren 57 und 58 gleichzeitig kurz leitend.

Da die beiden Wicklungsstränge 20 und 21 induktiv miteinander gekoppelt sind, bewirkt das Einschalten des Stranges 20 zum Zeitpunkt $t_{ein}$ eine Reduzierung des magnetischen Flusses im Stator 15, und da dieser Fluß das Bestreben hat, gleich zu bleiben, bewirkt diese Reduzierung einen entsprechenden Anstieg des Stromes $i_{58}$ durch den Transistor 58 und den Strang 21, um diesen Effekt zu kompensieren. Hierdurch erhält man hohe Stromspitzen 62, 63 beim Abschaltvorgang, wie das in Fig. 3C dargestellt ist, und diese Stromspitzen können Werte bis zum Zweifachen des Anlaufstromes erreichen, d.h. des Stromes, der durch den ohmschen Widerstand des betreffenden Stranges begrenzt ist. Diese Stromspitzen können unter anderem Radiostörungen bewirken und sind daher äußerst unerwünscht.

Die Erfindung beseitigt diese Stromspitzen mit einer sehr einfachen Maßnahme.

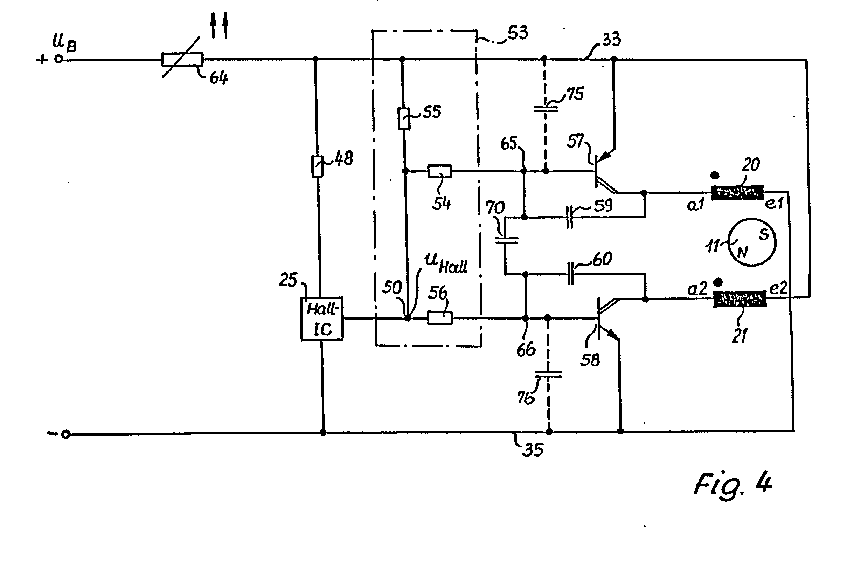

Fig. 4 zeigt eine Schaltung eines erfindungsgemäßen Motors. Gleiche oder gleichwirkende Teile wie in Fig. 2 werden mit denselben Bezugzeichen bezeichnet wie dort und gewöhnlich nicht nochmals beschrieben.

Statt der Diode 47 der Fig. 2 (oder zusätzlich zu ihr) ist bei Fig. 4 ein PTC-Widerstand 64 vorgesehen, dessen Aufgabe es ist, bei Blockierung des Rotors 11 den Motor stromlos zu machen. Der Hall-IC 25 der schaltung nach Fig. 4 hat eine eingebaute Spannungs-Stabilisierschaltung, so daß die Zenerdiode 49 der Fig. 2 entfallen kann.

Das aus Passiven Elementen aufgebaute Netzwerk 53 hat einen Ausgang 65, der zur Steuerelektrode des Darlingtontransistors 57 führt, welcher als Halbleitersteuerelement dient. Ferner hat das Netzwerk 53 einen Ausgang 66, der zur Steuerelektrode des Darlingtontransistors 58 führt, der ebenfalls als

Halbleitersteuerelement dient.

Zwischen diesen Ausgängen ist eine Koppelkapazität 70 vorgesehen, deren Aufgabe es ist, diese Ausgänge wechselspannungsmäßig zu koppeln und die Potentialänderungen an den Ausgängen 65 und 66 einander möglichst ähnlich zu machen. Diese Potentialänderungen werden vom Hallsignal $u_{Hall}$ am Ausgang 50 gesteuert und entsprechen sich daher in der Tendenz, aber weil die Widerstände 54 und 56 relativ hochohmig sind, entsprechen sich die Potentialänderungen an den Basen der Transistoren 57 und 58 nicht vollständig. - Versuche haben gezeigt, daß diese Koppelkapazität 70 Werte im Bereich von einigen hundert pF bis 1 µF haben kann, also in einem Größenbereich von mindestens 1 : 1000, ohne daß sich an der Funktion wesentliches ändert.

Optimal sind nach derzeitigen Erkenntnissen Werte in der Größenordnung nF, also z. B. 3...5 nF. Solche Werte können durch Keramikkondensatoren dargestellt werden, deren Lebensdauer sehr hoch ist. Zu hohe Kapazitätswerte führen durch den Ladevorgang beim Einschalten dazu, daß kurzzeitig beide Transistoren 57 und 58 leitend werden, was u.U. zu schwierigkeiten beim Anlauf führen kann. Auch können bei Schwankungen der Betriebsspannung $U_B$ entsprechende Lade- oder Entladevorgänge in der Koppelkapazität 70 auftreten, was bei zu hohen Werten ebenfalls störend wirkt. Die Millerkondensatoren 59 und 60 haben bevorzugt Werte im Bereich von etwa 100 bis etwa 220 pF. Unter 100 pF erhält man kaum mehr die gewünschte Schaltverzögerung, und bei hohen Kapazitätswerten (etwa ab 500 pF) ist die Gefahr von Stromspitzen wesentlich größer.

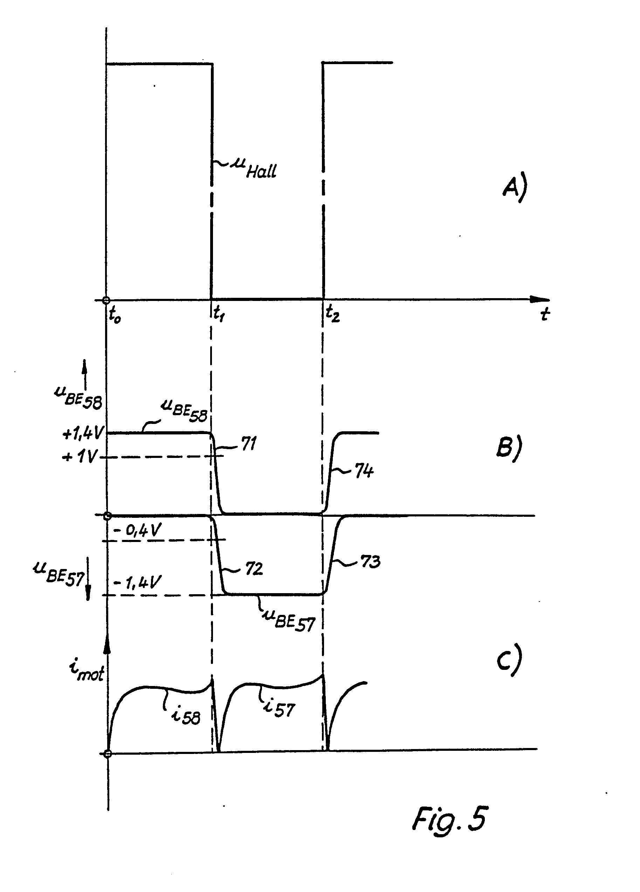

Fig. 5 erläutert die Wirkungsweise der Koppelkapazität 70. Fig. 5A zeigt - wie Fig. 3A - die Hallspannung am Ausgang 50 des Hall-IC 25. Diese springt zum Zeitpunkt t1 z. B. von plus 12 V auf 0 V. Dadurch sinkt die Basis-Emitter-Spannung $u_{BE58}$ des bis dahin leitenden Transistors 58, und zwar verzögert durch den Millerkondensator 60. Gleichzeitig wird, ebenfalls verzögert durch den Millerkondensator 59, die Basis-Emitter-Spannung $u_{BE57}$ des Transistors 57 negativer.

Durch die Koppelkapazität 70 ergibt sich nun ein im wesentlichen paralleler Verlauf des abfallenden Astes 71 von $u_{BE58}$ 8 und des ansteigenden, d.h. negativer werdenden Astes 72 von $u_{BE57}$. Anders ausgedrückt, haben die Äste 71 und 72 zu jedem Zeitpunkt etwa dasselbe du/dt, und sie unterscheiden sich praktisch nur durch eine Gleichspannung, nämlich die Spannung an der Koppelkapazität 70, die sich während dieser kurzen Zeitabschnitte nicht wesentlich ändern kann. Das gilt in gleicher Weise für die Äste 73 und 74 beim Ausschalten des Transistors 57 und Einschalten des Transistors 58 zum Zeitpunkt t2.

Durch diese parallelität des Spannungsverlaufs wird vermieden, daß die Ströme $i_{57}$ und $i_{58}$ beim Ausschalten nennenswerte Stromspitzen haben, wie das Fig. 5C zeigt. Es gelingt also, durch diese einfache Maßnahme Störspannungen ganz wesentlich zu reduzieren, weil die beiden Transistoren 57 und 58 bei der Kommutierung nicht mehr gleichzeitig leitend sein können. Wenn z. B. die Spannung$u_{BE58}$ von 1,4 V auf 1 V abgesunken ist, so daß der Transistor sperrt, hat gemäß Fig. 5B die Spannung $u_{BE57}$ erst -0,4 V erreicht, d.h. der Transistor 57 ist zu diesem Zeitpunkt noch nicht leitend. Es entsteht also eine - sehr erwünschte - Stromlücke zum Kommutierungszeitpunkt. Zu dem Zeitpunkt, zu dem sich die spannung $u_{Hall}$ ändert, beginnt auch der Strom im leitenden Transistor zu sinken, wie das Fig. 5C zeigt.

Außerdem kann bei der Schaltung nach Fig. 4 der Speicherkondensator 45 entfallen, der bei der Schaltung nach Fig. 2 erforderlich ist und der dort in der praxis ggf. die Lebensdauer des Motors begrenzt, wie das eingangs bereits erläutert wurde. Bei Fig. 4 wird durch die rel. langsamen Abschaltvorgänge der Transistoren 57 und 58 erreicht, daß die beim Abschalten freiwerdende induktive Energie der stränge 20, 21 im abschaltenden Transistor in Wärme umgesetzt und von diesem in der üblichen Weise über Kühlkörper oder dergleichen abgegeben wird. Da nämlich die Stromänderung di/dt beim Abschalten rel. klein ist, wird auch die induzierte Spannung klein, so daß z. B. nicht die Spannung der Freilaufdiode im betreffenden Transistor erreicht wird. (Vergl. die in Fig. 2 dargestellten Freilaufdioden 57' und 58'.) Die zu vernichtende Energie wird bei dem rel. langsam verlaufenden Abschaltvorgang des betreffenden Transistors - bei diesem Vorgang entsteht ohnedies Wärme - in Wärme umgesetzt. Dies erfolgt ohne negativen Durchbruch im betreffenden Transistor, d.h. ohne Beeinträchtigung der Lebensdauer und ohne Zenereffekte mit ihren sehr störenden Stromimpulsen, die entsprechende Hochfrequenzstörungen bewirken könnten.

Für eine Betriebsspannung $U_B$ von 24 V ergeben sich bei Fig. 4 folgende Werte:

| | |
|---|---|
| Widerstand 64... | PTC-Widerstand |
| Hall-IC 25... | Sprague UGN 3016 |
| Widerstand 48... | 750 Ohm |
| Widerstand 55... | 1,6 kOhm |
| Widerstände 54, 56... | 27 kOhm |
| Kondensatoren 59, 60... | 150 pF |
| Kondensator 70... | 4,7 nF |
| Transistor 57... | BD 680 |
| Transistor 58... | BD 679 |

Der Motor bei diesem Ausführungsbeispiel ist ein vierpoliger Motor mit bifilarer Wicklung entsprechend Fig. 2 der DE-A-28 35 210, Drehzahl 3000 U/min, Leistungsaufnahme ca. 5 w.

Die Schaltung nach Fig. 4 kann außerordentlich klein gebaut werden. Z.B. kann man die Widerstände als flache Dickschichtwiderstände ausbilden und die Bauelemente auf einer kreisringförmigen platine mit einem Außendurchmesser von 43 mm und einem Innendurchmesser von 22 mm anordnen. Einschließlich der Darlingtontransistoren 57 und 58 hat dann eine solche platine eine Dicke von nur 4 mm, wobei nur der Hall-IC 25 und der PTC-Widerstand 64 ein paar mm über sie hinausragen. Das ermöglicht den Bau außerordentlich kompakter Motoren mit einer sehr hohen Lebensdauer, da die Keramikkondensatoren 59, 60 und 70 auch bei den hohen Betriebstemperaturen eines Motors hohe Lebensdauern haben.

In manchen Fällen kann auch einer der Kondensatoren 59 oder 60 entfallen, da z. B. über die rel. große Koppelkapazität 70 z. B. der Kondensator 59 auch für den Transistor 58 wirksam ist, und durch die Koppelkapazität 70 ohnedies die potentiale an den Ausgängen 65 und 66 geklammert werden. Die Stränge 20 und 21 können bei der Erfindung mehr oder weniger stark induktiv gekoppelt sein. Statt des Hall-IC 25 kann man jeden äquivalenten Sensor verwenden, also jede Rotorstellungs-Signalquelle mit hohem Spannungshub, z. B. am Ausgang eines zwischengeschalteten Transistors, der ein Rotorstellungssignal niedrigen Hubs verstärkt und so ein signal mit hdem Spannungshub liefert. Selbstverständlich eignet sich die Erfindung in gleicher Weise für viersträngige oder sechssträngige Motoren, wobei dann die Schaltung entsprechend verdoppelt oder verdreifacht werden muß, wie das dem Fachmann geläufig ist. Die bevorzugte Anwendung sind aber zweisträngige Motoren, wie sie das Ausführungsbeispiel zeigt. Statt der Millerkondensatoren 59 und 60 kann man alternativ auch Verzögerungskondensatoren 75, 76 verwenden, die zwischen Basis und Emitter der Transistoren 57 bzw. 58 geschaltet sind. Die Lösung mit mindestens einem Millerkondensator 59 oder 60 wird aber bevorzugt, da man hierfür kleinere Kondensatoren benötigt. Alternativ kann die Schaltverzögerung auch dadurch bewirkt werden, daß in Fig. 4 zwischen dem punkt 50 und der Minusleitung 35 ein Verzögerungskondensator eingeschaltet wird, wobei man dann zweckmässig zwischen dem punkt 50 und dem Ausgang des Hall-IC 25 einen Widerstand einschaltet, um die Verzögerung bei den positiven und negativen Flanken des Hallsignals etwa gleich groß zu machen. Wichtig erscheint, daß irgendwo eine Schaltverzögerung vorhanden ist, die dann durch die Koppelkapazität 70 für beide Transistoren 57 und 58 in gleicher Weise wirksam gemacht wird.

Die erfindungsgemäße Schaltung erfüllt - trotz ihres extrem einfachen Aufbaus und kleinen Volumens - alle Anforderungen an eine hochwertige Kommutieranordnung. Außerdem ist ein Motor mit dieser schaltung in sehr einfacher Weise regelbar, z. B. bei einem Lüfter mittels eines in Reihe geschalteten NTC-Widerstands, um bei niedrigen Temperaturen eine niedere Lüfterdrehzahl zu erhalten, während 'mit zunehmender Temperatur die Lüfterdrehzahl zunimmt.

## Patentansprüche

1. Kollektorloser Gleichstrommotor mit mindestens einem Paar von Wicklungssträngen (20, 21), von welchem Paar der eine Wicklungsstrang (21) mit einem Ende (a2) über Halbleitersteuermittel (58) eines Leitungstyps mit dem einen Pol (z. B. Minuspol 35) eines Gleichstromnetzes ($U_B$) und der andere Wicklungsstrang (20) mit einem Ende (a1) über Halbleitersteuermittel (57) des entgegengesetzten Leitungstyps mit dem anderen Pol (z.-. Pluspol 33) des Gleichstromnetzes, gesteuert von rotorstellungsabhängigen Sensormitteln (25), alternierend verbindbar ist, wobei ferner der eine Wicklungsstrang (21) mit seinem anderen Ende (e2) an den anderen Pol (z. B. Pluspol 33) und der andere Wicklungsstrang (20) mit seinem anderen Ende (e1) an den einen Pol (z. B. Minuspol 35) des Gleichstromnetzes im Betrieb angeschlossen ist, wobei ferner eine Schaltverzögerung (Millerkondensatoren 59, 60; Verzögerungskondensatoren 75, 76) für mindestens eines der Halbleitersteuermittel (57, 58) vorgesehen ist, und an einem Ausgang (50) der rotorstellungsabhängigen Sensormittel (25) ein Netzwerk (53) aus passiven Bauelementen angeschlossen ist, das zwei Steuerausgänge (65, 66) zum Ansteuern der Steuerelektroden der beiden Halbleitersteuermittel (57, 5-) entgegengesetzten Leitungstyps aufweist, um mit dem Signal ($u_{Hall}$) an diesem einen Ausgang (50) beide Halbleitersteuermittel (57, 58) zu steuern, dadurch gekennzeichnet, daß zum Erzielen eines im wesentlichen übereinstimmenden Verlaufs der Potentialänderungen (Fig. 5B: 71, 72 bzw. 73, 74) an den an die Steuerausgänge (65, 66) dieses Netzwerks (53) angeschlossenen Steuerelektroden der beiden Halbleitersteuermittel (57, 58) diese Steuerausgänge (65, 66) wechselspannungsmäßig miteinander gekoppelt (70) sind.

2. Motor nach Anspruch 1, dadurch gekennzeichnet, daß zwischen den beiden Steuerausgängen (65, 66) eine Koppelkapazität (70) vorgesehen ist.

3. Motor nach Anspruch 2, dadurch gekennzeichnet, daß die Koppelkapazität (70) einen Wert im Bereich von etwa $10^{-10}$ bis etwa $10^{-6}$ F hat.

4. Motor nach Anspruch 3, dadurch gekennzeichnet, daß die Koppelkapazität (70) einen Wert im Bereich von etwa $10^{-9}$ bis etwa $10^{-8}$ F hat.

5. Motor nach einem der vorhergehenden Ansprüche, dadurch gekennzeichnet, daß die beiden Wicklungsstränge (20, 21) eines Strangpaares eine induktive Kopplung, vorzugsweise eine enge induktive Kopplung, aufweisen.

6. Motor nach einem der vorhergehenden Ansprüche, dadurch gekennzeichnet, daß die Halbleitersteuermittel Transistoren (57, 58) aufweisen, und daß mindestens einer dieser Transistoren ein Verzögerungsglied (75, 76), vorzugsweise einen Millerkondensator (59, 60), aufweist.

7. Motor nach Anspruch 6, dadurch gekennzeichnet, daß bei einem zweipulsigen Motor mit nicht überlappenden Stromimpulsen $(i_{57}, i_{58})$ der Millerkondensator (59, 60) einen kleineren Kapazitätswert als die Koppelkapazität (70) aufweist.

8. Motor nach Anspruch 7, dadurch gekennzeichnet, daß der Millerkondensator (59, 60) einen Kapazitätswert im Bereich von etwa 100 bis etwa 400 pF, bevorzugt ca. 150 pF, aufweist.

9. Motor nach mindestens einem der Ansprüche 1 - 8, dadurch gekennzeichnet, daß die komplementären Halbleitersteuermittel (57, 58) zur Aufnahme der von den Wicklungssträngen (20, 21) bei der Kommutierung jeweils abgegebenen induktiven Energie ausgebildet sind.

10. Verwendung eines Motors nach mindestens einem der vorhergehenden Ansprüche zum Antrieb eines Axiallüfters, vorzugsweise eines Axiallüfters von kurzer Länge (sogenannter Gerätelüfter).

## Claims

1. Brushless DC motor having at least one pair of winding phases (20, 21),

of which one winding phase (21) is alternately connectable at one end (a2) via semiconductor control means (58) of one conductivity type to one terminal (e.g., negative terminal 35) of a DC supply ($U_B$) and the other winding phase (20) is alternately connectable at one end (a1) via semiconductor control means (57) of the opposite conductivity type to the other terminal (e.g., positive terminal 33) of the DC supply, the alternate connections being controlled by rotor position sensor means (25), wherein also the one winding phase (21) is connected in operation at its other end (e2) to the other terminal (e.g., positive terminal 33) of the DC supply and the other winding phase (20) is connected in operation at its other end (e1) to the one terminal (e.g., negative terminal 35) of the DC supply,

wherein also a switching delay means (Miller capacitors 59, 60; delay capacitors 75, 76) is provided for at least one of the semiconductor control means (57, 58), and a network (53) of passive components is connected to an output (50) of the rotor position sensor means (25), which network comprises two control outputs (65, 66) for controlling the control electrodes of the two semiconductor control means (57, 58) of opposite conductivity type, in order to control both semiconductor control means (57, 58) with the signal ($u_{Hall}$) at said one output (50),

characterised in that said control outputs (65, 66) are AC-coupled (70) to one another in order to achieve substantially corresponding potential changes (Fig.5B: 71, 72 or 73, 74) at the control electrodes of the two semiconductor control means (57, 58) connected to said control outputs (65, 66) of the network (53).

2. Motor according to claim 1, characterised in that a coupling capacitor (70) is provided between the two control outputs (65, 66).

3. Motor according to claim 2, characterised in that the coupling capacitor (70) has a value in the range of about $10^{-10}$ to about $10^{-6}$ F.

4. Motor according to claim 3, characterised in that the coupling capacitor (70) has a value in the range of about $10^{-9}$ to about $10^{-8}$ F.

5. Motor according to any of the preceding claims, characterised in that the two winding phases (20, 21) of a pair of winding phases are inductively coupled, preferably closely inductively coupled.

6. Motor according to any of the preceding claims, characterised in that the semiconductor control means comprise transistors (57, 58) and in that at least one of these transistors comprises a delay device (75, 76), preferably a Miller capacitor (59, 60).

7. Motor according to claim 6, characterised in that with a double pulse motor with non-overlapping current pulses ($i_{57}, i_{58}$), the Miller capacitor (59, 60) has a smaller capacitance value than the coupling capacitor (70).

8. Motor according to claim 7, characterised in that the Miller capacitor (59, 60) has a capacitance value in the range of about 100 to 400 pF, preferably about 150 pF.

9. Motor according to any of claims 1 to 8, characterised in that the complementary semiconductor control means (57, 58) are adapted to receive the inductive energy released each time by the winding phases (20, 21) upon commutation.

10. Use of a motor according to any of the preceding claims for driving an axial fan, preferably an axial fan of short length (so-called appliance fan).

## Revendications

1. Moteur à courant continu sans collecteur, comportant au moins une paire de phases (20, 21), les phases de cette paire pouvant avoir, en alternance, l'une (21), une extrémité (a2) reliée à un pôle (par exemple le pôle négatif 35) d'un réseau à courant continu ($U_B$), par l'intermédiaire de moyens de commande à semi-conducteurs (58) d'un certain type de conduction, et l'autre (20), une extrémité (a1) reliée à l'autre pôle (par exemple le pôle positif 33) de ce réseau à courant continu par l'intermédiaire de moyens de commande à semi-conducteurs (57) du type de conduction opposé, l'alternance étant commandée par des moyens de détection (25) sensibles à la position du rotor,

la première phase étant, pendant le fonctionnement, reliée par son autre extrémité (e2) à l'autre pôle (par exemple au pôle positif 33) du réseau à courant continu et l'autre phase (20) étant reliée par son autre extrémité (e1) au premier pôle (par exemple au pôle négatif 35) dudit réseau, un retard de commutation (condensateurs de Miller 59, 60; condensateurs de retard 75, 76) étant prévu pour au moins un des moyens de commande à semi-conducteurs (57, 58),

et un réseau (53) de composants passifs présentant deux sorties de commande (65, 66) pour la commande des électrodes de commande des deux moyens de commande à semi-conducteurs (57, 58) de types de conduction opposés étant relié à une sortie (50) des moyens de détection (25) sensibles à la position du rotor, pour commander ces deux moyens de commande à semi-conducteurs (57, 58) avec le signal ($u_{Hall}$) à ladite sortie (50), caractérisé en ce que pour l'obtention d'une allure sensiblement concordante des variations de potentiel (figure 5B; 71, 72 et 73, 74) aux électrodes de commande des deux moyens de commande à semi-conducteurs (57, 58) qui sont reliées aux sorties de commande (65, 66) dudit réseau (53), ces sorties de commande (65, 66) sont couplées l'une à l'autre en tension alternative (70).

2. Moteur selon la revendication 1, caractérisé en ce qu'un condensateur de couplage (70) est prévu entre les deux sorties de commande (65, 66).

3. Moteur selon la revendication 2, caractérisé en ce que le condensateur de couplage (70) a une capacité comprise entre environ $10^{-10}$ et environ $10^{-6}$ F.

4. Moteur selon la revendication 3, caractérisé en ce que le condensateur de couplage (70) a une capacité comprise entre environ $10^{-9}$ et environ $10^{-8}$ F.

5. Moteur selon l'une des revendications précédentes, caractérisé en ce que les deux phases (20, 21) d'une paire présentent un couplage inductif, de préférence un couplage inductif serré.

6. Moteur selon l'une des revendications précédentes, caractérisé en ce que les moyens de commande à semi-conducteurs présentent des transistors (57, 58), et qu'au moins un de ces transistors présente un dispositif de retard (75, 76), de préférence un condensateur de Miller (59, 60).

7. Moteur selon la revendication 6, caractérisé en ce que, dans le cas d'un moteur à deux impulsions avec impulsions de courant ($i_{57}$, $i_{58}$) non chevauchantes, le condensateur de Miller (59, 60) a une plus faible capacité que le condensateur de couplage (70).

8. Moteur selon la revendication 7, caractérisé en ce que le condensateur de Miller (59, 60) a une capacité comprise entre environ 100 et environ 400 pF et de préférence d'environ 150 pF.

9. Moteur selon au moins une des revendications 1 à 8, caractérisé en ce que les moyens de commande à semiconducteurs complémentaires (57, 58) sont conçus pour absorber l'énergie inductive émise par les phases (20, 21) lors de la commutation.

10. Utilisation d'un moteur selon au moins une des revendications précédentes pour l'entraînement d'un ventilateur axial de faible longueur (ventilateur d'appareil).

FIG.1b

FIG.1a

FIG. 2

Fig.3

Fig. 4

0 150 324

Fig.5